# EUROPEAN PATENT SPECIFICATION

(11) **EP 1 985 533 B1**
(45) Date of publication and mention of the grant of the patent: **31.03.2021**
(21) Application number: 07831455.6
(22) Date of filing: 08.11.2007
(51) Int. Cl.: B32B 15/08, B63B 3/68, C08L 23/28, F16F 9/30, C08K 3/26, C08K 5/02, C08L 91/06

(54) **VIBRATION DAMPING MATERIAL AND VIBRATION DAMPING STRUCTURE**
STOSSDÄMPFENDES MATERIAL UND STOSSDÄMPFENDE STRUKTUR
MATÉRIAU AMORTISSANT LES VIBRATIONS ET STRUCTURE AMORTISSANT LES VIBRATIONS

(30) Priority: 09.02.2007 JP 2007030499
(43) Date of publication of application: 29.10.2008
(73) Proprietor: Sekisui Chemical Co., Ltd., Osaka 530-8565 (JP)
(72) Inventor: MATSUDA, Yoshifumi, Kyoto-shi Kyoto 601-8105 (JP); ABE, Hiroyuki, Kyoto-shi Kyoto 601-8105 (JP); OGUCHI, Takashi, Kyoto-shi Kyoto 601-8105 (JP)
(74) Representative: Paul, Dieter-Alfred
(86) International application number: PCT/JP2007/071724
(87) International publication number: WO 2008/096489

(56) References cited:
- JP-A- 2002 242 356
- JP-A- 2003 268 895
- JP-A- 2004 043 983
- JP-A- 2004 250 639
- JP-A- 2004 263 166
- JP-A- 2005 205 816
- JP-B2- 03 001 150
- JP-U- 05 037 678
- US-A1- 2007 012 509

## Description

### Technical Field

The present invention relates to a vibration damper, and preferably a marine vibration damper and a vibration damping structure. More particularly, it relates to a vibration damper and a vibration damping structure, having excellent vibration damping performance and fireproof performance.

### Background Art

Conventionally, a method of overpainting a coating-type vibration damper such as an epoxy resin-based vibration damper on walls, floors and ceilings of engine rooms, resident rooms and the like has been employed to ensure vibration damping properties of ships. However, it is necessary to take drying time during overpainting. This required long working time, resulting in increase of working cost.

Furthermore, to ensure fireproof performance in addition to vibration damping performance in ships, there is the case that treatment for further imparting fireproof performance to the surface of a coating-type vibration damper is required. For example, Patent Document 1 proposes that a glass fiber fireproof layer and a metal film fireproof layer are provided on the outer surface of an epoxy vibration damper applied to a structure or equipment of a ship.

Furthermore, Patent Document 2 proposes a structure that a vibration damper comprising a viscoelastic material, and a steel plate are sandwiched between a floor steel plate and a deck composition layer, wherein the vibration damper and the steel plate, and the steel plate and the deck composition layer, are adhered through an adhesive layer.
Patent Document 1: JP-A-2005-205816
Patent Document 2: JP-UM(Utility Model)-A-5-037678
A further vibration damper is disclosed in document US 2007/0012509 A.

### Disclosure of the Invention

### Problems that the Invention is to Solve

In general, paint application in ships is conducted by directly applying a paint by hand working. Therefore, coating work is complicated, and furthermore, finish may be poor depending on the level of skill of workers. Additionally, there is a possibility that a paint makes foul surrounding materials other than working objects during working.

Furthermore, the thickness of the finished coating film is increased, and this gives rise to the problem that space of rooms and piping space under the roof are decreased by just that much.

The present invention has an object to provide fresh vibration damping and fireproof means that can solve the above various problems due to paint application.

### Means for Solving the Problems

The present inventors have found that a vibration damper comprising a constrained layer and a resin layer, wherein an organic mass of the resin layer is a predetermined value or less can provide a vibration damper and a vibration damping structure, having excellent vibration damping performance and fireproof performance, without involving various problems due to paint application, and have completed the present invention.

The invention is a fireproof vibration damping structure and a vibration damper comprising a constrained layer and a resin layer, wherein the vibration damper is adhered at the resin layer side thereof to the floor steel plate as an adherend, wherein the constrained layer is constituted of an inorganic material, an organic mass of the resin layer is 0.6 kg/m² or less and 0.2 kg/m² or more, wherein organic mass means a composition having C-H bond in the composition constituting the resin layer, and can be measured by ignition loss measured by ignition loss test of JIS K 0067 "Loss of chemical product, and residue test method", a loss factor is 0.1 or more, wherein the loss factor is measured according to JIS G 0602 "Test methods for vibration-damping property in laminated damping steel sheets of constrained type", and the resin layer is constituted of a resin composition comprising 100 parts by weight of a chlorine-containing thermoplastic resin having a chlorine content of 20 to 70 wt% and a weight average molecular weight of 400,000 or more, and 200 to 1,000 parts by weight of a chlorinated paraffin having an average carbon atom number of 12 to 50 and a degree of chlorination of 30 to 75 wt%.

The vibration damper of the invention is preferably used in ships.

Preferably, a paint surface coating is applied to the constrained material and an organic mass of the paint is 65 g/m² or less in one surface.

Preferably, the fireproof vibration damping structure comprises a deck composition layer, wherein the vibration damper is sandwiched between the deck composition layer at the constrained layer side of the vibration damper and the floor steel plate at the resin layer side of the vibration damper.
Moreover, the invention relates to the use of a vibration damper for creating a fireproof vibration damping structure according to one of the foregoing claims, wherein the vibration damper comprises a constrained layer and a resin layer, wherein the constrained layer is constituted of an inorganic material, an organic mass of the resin layer is 0.6 kg/m² or less and 0.2 kg/m² or more, wherein organic mass means a composition having C-H bond in the composition constituting the resin layer, and can be measured by ignition loss measured by ignition loss test of JIS K 0067 "Loss of chemical product, and residue test method", and the resin layer is constituted of a resin composition comprising 100 parts by weight of a chlorine-containing thermoplastic resin having a chlorine content of 20 to 70 wt% and a weight average molecular weight of 400,000 or more, and 200 to 1,000 parts by weight of a chlorinated paraffin having an average carbon atom number of 12 to 50 and a degree of chlorination of 30 to 75 wt%.

The constrained layer constituting the vibration damper according to the present invention can be any layer so long as it is constituted of an inorganic material, and the material is steel plates, stainless steels, aluminum, gypsum, concretes and the like, and is not particularly limited. Steel plates having high elastic modulus are desirable for the improvement of vibration damping property.

The thickness of the constrained material is not particularly limited. However, it is desired that the thickness is 10% or more of the thickness of the adherent to achieve that loss factor in the state that the vibration damper is provided on, for example, a constituent material of ships is 0.1 or more.

Surface coating may be applied to the constrained material. The paints are acrylic resin paints, polyester resin paints, silicon resin paints, amino-alkyd resin paints, vinyl chloride resin paints, fluorine resin paints, epoxy resin paints, urethane resin paints, and the like, and are not particularly limited. The weight of the paint is not particularly limited, but the amount that the organic mass is 65 g/m² or less in one surface is desired.

The materials of the resin layer constituting the vibration damper according to the present invention are rubber types, plastic types, asphalt types and the like, and are not particularly limited. However, for the required fireproof performance, the organic mass is 0.6 kg/m² or less. Furthermore, to maintain the performance as the vibration damper, the organic mass is 0.2 kg/m² or more.

Throughout the claims and the description, the term "organic mass" means a composition having C-H bond in the composition constituting the resin layer, and can be measured by ignition loss measured by ignition loss test of JIS K0067 "Loss of chemical product, and residue test method". Furthermore, the deck composition means a mixture comprising sand, water, cement and rubber liquid.

To achieve that the loss factor is 0.1 or more in the state that the vibration damper is provided on the floor steel plate and to achieve that the loss factor is 0.1 or more in the state that the vibration damper is sandwiched between the deck composition layer at the constrained layer side and the floor steel plate at the resin layer side, it is provided that the resin layer is constituted of a resin composition comprising 100 parts by weight of a chlorine-containing thermoplastic resin having a chlorine content of 20 to 70 wt% and a weight average molecular weight of 400,000 or more, and 200 to 1,000 parts by weight of a chlorinated paraffin having an average carbon atom number of 12 to 50 and a degree of chlorination of 30 to 75 wt% (particularly, a chlorinated paraffin in which a chlorinated paraffin having a degree of chlorination of 70 wt% or more occupies 10 to 70 wt%). As such a resin layer, a product obtained by kneading 100 parts by weight of a chlorinated polyethylene obtained by post-chlorinating a high density polyethylene by a water suspension method, 400 parts by weight of a chlorinated paraffin (chlorine content: 50 wt%, number average carbon number: 14) and 400 parts by weight of calcium carbonate at 120°C using a roll kneader, and pressing the resin mixture obtained at 140°C to mold into a sheet having a thickness of 1.0 mm is preferably used.

On a floor of general resident room and the like, a layer comprising a deck composition is provided on a floor steel plate. When the vibration damper according to the present invention is used, the vibration damper is provided on a floor deck, and a deck composition is provided thereon. By this, the deck composition serves the function of the constrained layer, and it is possible to further improve vibration damping performance of the vibration damper. Furthermore, the floor can be finished as the same as the general floor in appearance. The vibration damper of the present invention has the performance to pass The International Maritime Organization (IMO), Marine Safety Committee Resolution 61(67) "International code for application of fire test procedures", Part 6 "Test for primary deck coverings" (IMO General Meeting, Resolution A.653(17)", and therefore can be provided on a deck. The deck composition is not particularly limited. For the improvement of leveling and vibration damping property, about 6 to 12 mm is desired.

The vibration damping structure according to the present invention is constituted by adhering the resin layer of the vibration damper of the present invention to the floor steel plate. In particular, the interior panel generally has the structure that an acoustic absorbent such as glass wool or wool rock is sandwiched between thin steel plates (thickness: about 0.6 to 1.0 mm). Therefore, it is possible to provide an interior panel having excellent sound insulating properties by adhering the vibration damper of the present invention to the thin steel plate.

### Advantage of the Invention

Therefore, one advantage of the invention is that excellent vibration damping performance and excellent fireproof performance can be exhibited in combination without using a paint al all. As a result, all of the problems due to paint application, that coating work is complicated because a paint is directly applied by hand working, and additionally, the finish becomes poor depending of the level of skill of a worker can be solved.

Furthermore, the vibration damper according to the present invention has the performance to pass The International Maritime Organization (IMO), Marine Safety Committee Resolution 61(67) "International code for application of fire test procedures", Part 5 "Test for surface flammability" (IMO General Meeting Resolution A.653(16) "Test procedures for surface flammability of bulkhead, ceiling and deck finishing materials", and therefore has fireproof performance.

### Best Mode for Carrying Out the Invention

To specifically explain the present invention, Examples of the present invention and Comparative Example for comparing with those are described below.

### Examples 1 to 3 and Comparative Example 1

The following materials were provided.
Substrate: Steel plate (thickness: 6 mm)
Constrained layer: Color steel plate (thickness: 0.4 to 1.2 mm)
Resin layer: A product obtained by kneading 100 parts by weight of a chlorinated polyethylene (weight average molecular weight: 500,000, chlorine content: 40 wt%, crystallinity measured by DSC method: 10 J/g) obtained by post-chlorinating a high density polyethylene by a water suspension method, 400 parts by weight of a chlorinated paraffin (a product of Ajinomoto Fine Chemical Co., trade name: Empara K50, chlorine content: 50 wt%, number average carbon number: 14) and 400 parts by weight of calcium carbonate (a product of Maruo Calcium Co., Ltd., trade name: R Ground Calcium Carbonate) at 120°C using a roll kneader, and pressing the resin mixture obtained at 140°C to mold into a sheet (thickness: 0.5 mm, organic mass: 0.6 kg/m²).

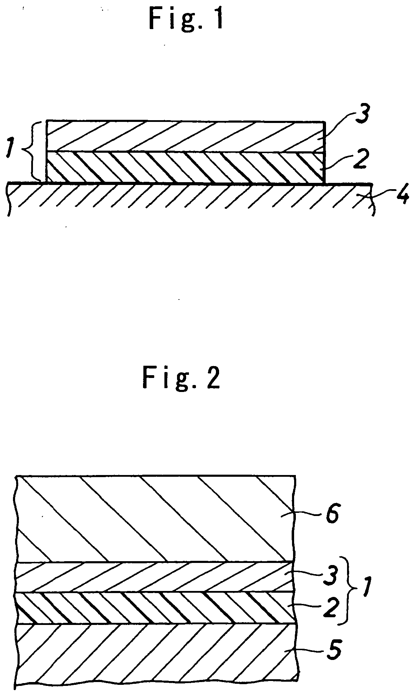

As shown in Fig. 1, a vibration damper (1) comprising a constrained layer (3) and a resin layer (2) was provided on a substrate (4) such that the resin layer (2) contacts the substrate (4).

### Examples 4 to 6

The following materials were provided.
Substrate: Steel plate (thickness: 6 mm)
Constrained layer: Color steel plate (thickness: 0.4 to 1.2 mm)
Resin layer: A product obtained by kneading 100 parts by weight of a chlorinated polyethylene (weight average molecular weight: 500,000, chlorine content: 40 wt%, crystallinity measured by DSC method: 10 J/g) obtained by post-chlorinating a high density polyethylene by a water suspension method, 400 parts by weight of a chlorinated paraffin (a product of Ajinomoto Fine Chemical Co., trade name: Empara K50, chlorine content: 50 wt%, number average carbon number: 14) and 300 parts by weight of calcium carbonate (a product of Maruo Calcium Co., Ltd., trade name: R Ground Calcium Carbonate) at 120°C using a roll kneader, and pressing the resin mixture obtained at 140°C to mold into a sheet (thickness: 0.5 mm, organic mass: 0.6 kg/m²).
Deck composition layer: A product obtained by mixing given amounts of sand, water, cement and rubber liquid (thickness: 6-12 mm).

As shown in Fig. 2, a vibration damper (1) comprising a constrained layer (3) and a resin layer (2) was provided on a substrate (5) such that the resin layer (2) contacts the substrate (5), and a deck composition layer (6) was provided thereon.

### Evaluation test

The following evaluation tests were conducted to the structures of Examples 1 to 6 and Comparative Example 1.

### a) Loss test

Test procedure: According to JIS G0602 "Test methods for vibration-damping property in laminated damping steel sheets of constrained type"

### b) Fire safety test

Test procedure: According to The International Maritime Organization (IMO), Marine Safety Committee Resolution 61(67) "International code for application of fire test procedures", Part 5 "Test for surface flammability" and IMO General Meeting Resolution A.653(16) "Test procedures for surface flammability of bulkhead, ceiling and deck finishing materials"

Test results are shown in Table 1 together with constitution of a vibration damper.

**[TABLE 1]**

| | Constrained layer | Resin layer | Loss factor | Fire safety test |
|---|---|---|---|---|
| | Thickness (mm) | Thickness (mm)/ organic mass (kg/m²) | | |
| Example 1 | 1.2 | 0.5/0.6 | 0.16 | Pass |
| Example 2 | 0.8 | 0.5/0.6 | 0.1 | Pass |
| Comparative Example 2 | 0.4 | 0.5/0.6 | 0.08 | Pass |
| Example 4 | 1.2 | 0.5/0.6 | 0.2 | Pass |
| Example 5 | 0.8 | 0.5/0.6 | 0.14 | Pass |
| Example 6 | 0.4 | 0.5/0.6 | 0.12 | Pass |
| Comparative Example 1 | 0.8 | 1.0/1.2 | 0.11 | Not pass |

As is apparent from Table 1, the vibration damping structure according to the present invention shows excellent loss factor and passes the fire safety test.

### Brief Description of the Drawings

Fig. 1 is a cross-sectional view showing a vibration damping structure constituted in Examples 1 to 3 and Comparative Example 1.
Fig. 2 is a cross-sectional view showing a vibration damping structure constituted in Examples 4 to 6. Description of Reference Numerals and Signs
   (1) Vibration damper
   (2) Resin layer
   (3) Constrained layer
   (4) Substrate
   (5) Substrate
   (6) Deck composition layer

## Claims

1. A fireproof vibration damping structure comprising a floor steel plate of a ship and a vibration damper comprising a constrained layer and a resin layer, wherein the vibration damper is adhered at the resin layer side thereof to the floor steel plate as an adherend, wherein the constrained layer is constituted of an inorganic material, an organic mass of the resin layer is 0.6 kg/m² or less and 0.2 kg/m² or more, wherein organic mass means a composition having C-H bond in the composition constituting the resin layer, and can be measured by ignition loss measured by ignition loss test of JIS K 0067 "Loss of chemical product, and residue test method", a loss factor is 0.1 or more, wherein the loss factor is measured according to JIS G 0602 "Test methods for vibration-damping property in laminated damping steel sheets of constrained type", and the resin layer is constituted of a resin composition comprising 100 parts by weight of a chlorine-containing thermoplastic resin having a chlorine content of 20 to 70 wt% and a weight average molecular weight of 400,000 or more, and 200 to 1,000 parts by weight of a chlorinated paraffin having an average carbon atom number of 12 to 50 and a degree of chlorination of 30 to 75 wt%.

2. A fireproof vibration damping structure according to claim 1, wherein a paint surface coating is applied to the constrained material and an organic mass of the paint is 65 g/m² or less in one surface, wherein organic mass means a composition having C-H bond in the composition constituting the resin layer, and can be measured by ignition loss measured by ignition loss test of JIS K 0067 "Loss of chemical product, and residue test method".

3. A fireproof vibration damping structure according to claim 1 comprising a deck composition layer, wherein the vibration damper is sandwiched between the deck composition layer at the constrained layer side of the vibration damper and the floor steel plate at the resin layer side of the vibration damper.

4. Use of a vibration damper for creating a fireproof vibration damping structure according to one of the foregoing claims, wherein the vibration damper comprises a constrained layer and a resin layer, wherein the constrained layer is constituted of an inorganic material, an organic mass of the resin layer is 0.6 kg/m² or less and 0.2 kg/m² or more, wherein organic mass means a composition having C-H bond in the composition constituting the resin layer, and can be measured by ignition loss measured by ignition loss test of JIS K 0067 "Loss of chemical product, and residue test method", and the resin layer is constituted of a resin composition comprising 100 parts by weight of a chlorine-containing thermoplastic resin having a chlorine content of 20 to 70 wt% and a weight average molecular weight of 400,000 or more, and 200 to 1,000 parts by weight of a chlorinated paraffin having an average carbon atom number of 12 to 50 and a degree of chlorination of 30 to 75 wt%.

## Patentansprüche

1. Feuerfeste schwingungsdämpfende Struktur, umfassend eine Bodenstahlplatte eines Schiffes und einen Schwingungsdämpfer, der eine Zwangsschicht und eine Harzschicht umfasst, wobei der Schwingungsdämpfer auf der Seite der Harzschicht an die Bodenstahlplatte als ein Klebstoff angeklebt ist, wobei die Zwangsschicht aus einem anorganischen Material besteht, eine organische Masse der Harzschicht 0,6 kg/m² oder weniger und 0,2 kg/m² oder mehr beträgt, wobei unter der organischen Masse eine Zusammensetzung mit einer C-H-Bindung in der die Harzschicht bildenden Zusammensetzung zu verstehen ist, und durch den Glühverlusttest nach JIS K 0067 "Testmethoden für Verlust und Rückstände von chemischen Produkten" gemessen werden kann, ein Verlustfaktor 0,1 oder mehr beträgt, wobei der Verlustfaktor gemäß JIS G 0602 "Testmethoden für schwingungsdämpfende Eigenschaften in laminierten, dämpfenden Stahlblechen in Zwangslage", gemessen wird, und die Harzschicht aus einer Harzzusammensetzung besteht, die 100 Gewichtsteile eines chlorhaltigen thermoplastischen Harzes mit einem Chlorgehalt von 20 bis 70 Gewichtsprozent und einem durchschnittlichen Molekulargewicht von 400.000 oder mehr, und 200 bis 1.000 Gewichtsteile eines chlorierten Paraffins einer durchschnittlichen Kohlenstoffatomzahl von 12 bis 50 und einem Chlorierungsgrad von 30 bis 75 Gewichtsprozent umfasst.

2. Feuerfeste schwingungsdämpfende Struktur nach Anspruch 1, **dadurch gekennzeichnet, dass** eine Farboberflächenbeschichtung auf das Zwangsmaterial aufgebracht ist und eine organische Masse der Farbe 65 g/m² oder weniger in einer Oberfläche beträgt, wobei unter der organischen Masse eine Zusammensetzung mit einer C-H-Bindung in der die Harzschicht bildenden Zusammensetzung zu verstehen ist, und durch den Glühverlust gemessen werden kann, der durch den Glühverlusttest nach JIS K 0067 "Testmethoden für Verlust und Rückstände von chemischen Produkten" gemessen wird.

3. Feuerfeste schwingungsdämpfende Struktur nach Anspruch 1, umfassend eine Deckzusammensetzungsschicht, wobei der Schwingungsdämpfer sandwichartig zwischen der Deckzusammensetzungsschicht an der Zwangsschichtseite des Schwingungsdämpfers und der Bodenstahlplatte an der Harzschichtseite des Schwingungsdämpfers angeordnet ist.

4. Verwendung eines Schwingungsdämpfers zum Erzeugen einer feuerfesten schwingungsdämpfenden Struktur nach einem der vorherigen Ansprüche, wobei der Schwindungsdämpfer eine Zwangsschicht und eine Harzschicht umfasst, wobei die Zwangsschicht aus einem anorganischen Material besteht, eine organische Masse der Harzschicht 0,6 kg/m² oder weniger und 0,2 kg/m² oder mehr beträgt, wobei unter der organischen Masse eine Zusammensetzung mit einer C-H-Bindung in der die Harzschicht bildenden Zusammensetzung zu verstehen ist, und durch den Glühverlusttest nach JIS K 0067 "Testmethoden für Verlust und Rückstände von chemischen Produkten" gemessen werden kann, und die Harzschicht aus einer Harzzusammensetzung besteht, die 100 Gewichtsteile eines chlorhaltigen thermoplastischen Harzes mit einem Chlorgehalt von 20 bis 70 Gewichtsprozent und einem gewichtsmittleren Molekulargewicht von 400.000 oder mehr und 200 bis 1.000 Gewichtsteile eines chlorierten Paraffins mit einer mittleren Kohlenstoffatomzahl von 12 bis 50 und einem Chlorierungsgrad von 30 bis 75 Gewichtsprozent umfasst.

## Revendications

1. Structure ignifuge d'amortissement de vibrations comprenant une plaque d'acier de plancher d'un navire et un amortisseur de vibrations comprenant une couche contrainte et une couche de résine, l'amortisseur de vibrations étant collé, du côté de la couche de résine, à la plaque d'acier de plancher en tant qu'adhérent, la couche contrainte étant constituée d'un matériau inorganique, la masse organique de la couche de résine étant de 0,6 kg/m² ou moins et 0,2 kg/m² ou plus, la masse organique signifiant une composition ayant une liaison C-H dans la composition constituant la couche de résine, et pouvant être mesurée par la perte au feu mesurée par le test de perte au feu de JIS K 0067 "Méthodes de test de la perte et des résidus de produits chimiques", un facteur de perte étant 0.1 ou plus, le facteur de perte étant mesuré selon la norme JIS G 0602 "Méthodes d'essai pour la propriété d'amortissement des vibrations dans les tôles d'acier laminées de type contraint", et la couche de résine étant constituée d'une composition de résine comprenant 100 parties en poids d'une résine thermoplastique contenant du chlore ayant une teneur en chlore de 20 à 70 % en poids et un poids moléculaire moyen en poids de 400 000 ou plus, et 200 à 1 000 parties en poids d'une paraffine chlorée ayant un nombre moyen d'atomes de carbone de 12 à 50 et un degré de chloration de 30 à 75 % en poids.

2. Structure ignifuge d'amortissement de vibrations selon la revendication 1, un revêtement de surface de peinture étant appliqué sur le matériau contraint et une masse organique de la peinture étant de 65 g/m² ou moins dans une surface, la masse organique signifiant une composition ayant une liaison C-H dans la composition constituant la couche de résine, et peut être mesurée par la perte au feu mesurée par le test de perte au feu de JIS K 0067 "Méthodes de test de la perte et des résidus de produits chimiques".

3. Structure ignifuge d'amortissement de vibrations selon la revendication 1, comprenant une couche de composition de finition, l'amortisseur de vibrations étant pris en sandwich entre la couche de composition de finition du côté de la couche contrainte de l'amortisseur de vibrations et la plaque d'acier du plancher du côté de la couche de résine de l'amortisseur de vibrations.

4. Utilisation d'un amortisseur de vibrations pour créer une structure d'amortissement des vibrations ignifuge selon l'une des revendications précédentes, l'amortisseur de vibrations comprenant une couche contrainte et une couche de résine, la couche contrainte étant constituée d'un matériau inorganique, une masse organique de la couche de résine étant de 0,6 kg/m² ou moins et 0,2 kg/m² ou plus, la masse organique signifiant une composition ayant une liaison C-H dans la composition constituant la couche de résine, et peut être mesurée par la perte au feu mesurée par le test de perte au feu de JIS K 0067 "Méthodes de test de la perte et des résidus de produits chimiques", et la couche de résine étant constituée d'une composition de résine comprenant 100 parties en poids d'une résine thermoplastique chlorée ayant une teneur en chlore de 20 à 70 % en poids et un poids moléculaire moyen en poids de 400 000 ou plus, et 200 à 1 000 parties en poids d'une paraffine chlorée ayant un nombre moyen d'atomes de carbone de 12 à 50 et un degré de chloration de 30 à 75 % en poids.
